# FASCICULE DE BREVET EUROPEEN

(11) **EP 3 691 920 B1**
(45) Date de publication et mention de la délivrance du brevet: **13.09.2023**
(21) Numéro de dépôt: 18804362.4
(22) Date de dépôt: 28.09.2018
(51) Int. Cl.: B60C 15/06, B60C 15/024

(54) **PNEUMATIQUE DONT LA ZONE DU BOURRELET COMPORTE DES INCISIONS**
REIFEN MIT EINSCHNITTEN IM WULSTBEREICH
TYRE IN WHICH THE BEAD REGION HAS SIPES

(30) Priorité: 02.10.2017 FR 1759166
(43) Date de publication de la demande: 12.08.2020
(73) Titulaire: Compagnie Générale des Etablissements Michelin, 63000 Clermont-Ferrand (FR)
(72) Inventeur: LICENSE, William, 63040 Clermont-Ferrand Cedex 9 (FR); BABAUD, Jacques, 63040 Clermont-Ferrand Cedex 9 (FR)
(74) Mandataire: Millanvois, Patrick Jacques Jean
(86) Numéro de dépôt international: PCT/FR2018/052394
(87) Numéro de publication internationale: WO 2019/068995

(56) Documents cités:
- JP-A- 2000 247 117
- JP-A- 2009 012 519
- KR-A- 20160 056 373
- US-A- 5 318 089

## Description

### Domaine de l'invention

La présente invention concerne un pneumatique et plus particulièrement un pneumatique destiné à équiper des véhicules portant de lourdes charges et roulant à vitesse soutenue, tels que, par exemple les camions, tracteurs, remorques ou bus routiers.

De façon générale, un pneumatique est un objet ayant une géométrie de révolution par rapport à un axe de rotation. Un pneumatique comprend deux bourrelets destinés à être montés sur une jante ; il comprend également deux flancs reliés aux bourrelets, un sommet comportant une bande de roulement destinée à entrer en contact avec le sol, le sommet ayant un premier côté relié à l'extrémité radialement extérieure de l'un des deux flancs et ayant un deuxième côté relié à l'extrémité radialement extérieure de l'autre des deux flancs.

La constitution du pneumatique est usuellement décrite par une représentation de ses constituants dans un plan méridien, c'est-à-dire un plan contenant l'axe de rotation du pneumatique. Les directions radiale, axiale et circonférentielle désignent respectivement les directions perpendiculaire à l'axe de rotation du pneumatique, parallèle à l'axe de rotation du pneumatique et perpendiculaire à tout plan méridien. Dans ce qui suit, les expressions « radialement », « axialement » et « circonférentiellement » signifient respectivement « selon une direction radiale », « selon la direction axiale » et « selon une direction circonférentielle » du pneumatique. Les expressions « radialement intérieur, respectivement radialement extérieur » signifient « plus proche, respectivement plus éloigné, de l'axe de rotation du pneumatique, selon une direction radiale ». Le plan équatorial est un plan perpendiculaire à l'axe de rotation du pneumatique, positionné axialement de façon à couper la surface de la bande de roulement sensiblement à mi-distance des bourrelets. Les expressions « axialement intérieur, respectivement axialement extérieur » signifient « plus proche, respectivement plus éloigné, du plan médian du pneumatique, selon la direction axiale ».

### État de la technique

Les pneumatiques de type poids-lourds comportent en général une couche de matériau résistant à l'abrasion, communément désigné par « protecteur », dans la zone du bourrelet en contact avec le rebord de jante, cette zone étant appelée « portage ». De tels pneumatiques comportent encore usuellement au niveau des bourrelets une ou plusieurs couches d'éléments de renforcement appelés « raidisseurs ». Ces couches sont le plus souvent constituées d'éléments de renforcement orientés par rapport à la direction circonférentielle d'un angle inférieur à 45°, et le plus souvent inférieur à 25°. Ces couches d'éléments de renforcements ont notamment pour fonction de limiter les déplacements longitudinaux des matériaux constitutifs du bourrelet par rapport à la jante de la roue pour limiter une usure prématurée dudit bourrelet. Elles contribuent encore à la protection du pneumatique contre les agressions subies lors du montage et du démontage des pneumatiques sur les jantes. Elles permettent également de limiter la déformation permanente du bourrelet sur le crochet de jante, due au phénomène de fluage dynamique des matériaux élastomériques. Cette déformation du bourrelet peut empêcher le rechapage des pneumatiques lorsqu'elle est excessive, voire même peut aboutir à un arrêt prématuré de l'utilisation du pneumatique.

La présence de ces couches d'éléments de renforcement ou raidisseurs rendent plus complexe la conception de ces zones des bourrelets du pneumatique. La présence d'une couche supplémentaire d'une part et son agencement par rapport notamment au retournement de l'armature de carcasse et à la tringle d'autre part conduisent à une conception nécessitant des mélanges caoutchouteux pour séparer les extrémités de couches et assurer le positionnement souhaité des différentes extrémités.

D'autres solutions ont déjà été proposé dans l'état de la technique, tel que par exemple ajouter au bourrelet du pneumatique des nervures faisant protubérance par rapport à la surface du bourrelet comme cela est décrit dans le brevet US 1 915 963. Par les demandes de brevet JP 2000 247117 A et FR2130197, on connait aussi une proposition comportant des incisions dans le bourrelet. Cependant, l'application de ces enseignements ne donne aucune amélioration visible de l'usure au portage.

Les inventeurs se sont ainsi donnés pour mission de fournir des pneumatiques pour véhicules "Poids-Lourds", dont les performances d'endurance, notamment la capacité à résister à l'usure au portage, est conservée ou améliorée tout en permettant une simplification de la conception du pneumatique.

### Brève description de l'invention

Ce but est atteint, selon l'invention par un pneumatique comprenant une bande de roulement, ladite bande de roulement étant réunie à deux bourrelets par deux flancs, chaque bourrelet ayant une surface de contact destinée à être en contact avec un rebord de jante, ledit bourrelet comportant au moins un renforcement axialement le plus à l'extérieur présentant une interface radialement extérieure, le bourrelet comportant des entailles d'épaisseur « T » comprise entre 0,1 mm et 1,5 mm, le pneumatique présentant un pas circonférentiel « P » entre deux entailles consécutives, lesdites entailles s'étendant sensiblement perpendiculairement à la surface de contact, sur une profondeur « D » inférieure à l'épaisseur axiale « A » de matériau non pourvu de renforcement compris entre ladite surface de contact et la carcasse, et supérieure à la plus petite des valeurs de 50% de A et 3 mm, caractérisé en ce que , lesdites entailles s'étendant radialement depuis une limite radialement intérieure et une limite radialement extérieure, la longueur curviligne entre la limite radialement intérieure et la limite radialement extérieure valant « H », un point intermédiaire étant, sur une coupe méridienne du pneumatique monté sur jante, gonflé à pression nominale et chargé à deux fois sa capacité de charge nominale, situé à mi-distance curviligne entre le point de contact long avec la jante à un premier azimut correspondant au centre de l'aire de contact du pneumatique sur le sol et le point de contact court avec la jante à un second azimut situé à 180° du premier azimut, le point de contact long étant le point le plus proche du bout du rebord de jante auquel se termine le contact, ce qui survient lors du passage du bourrelet dans l'aire de contact, le point de contact court étant le point de contact en dehors de toute déformation due à l'écrasement du pneumatique sous l'effet de la charge, c'est-à-dire le point le plus éloigné du bout du rebord de jante auquel se termine le contact, la longueur curviligne entre le point de contact long et le point de contact court valant « HB », ladite limite radialement intérieure se situant radialement vers l'intérieur par rapport audit point intermédiaire d'une valeur « H1 » avec H1=HB/2+B, où B est compris entre 90% du pas P et le minimum entre 250% du pas P et la distance radiale entre le point intermédiaire et la moitié du diamètre nominal de la jante, ladite limite radialement extérieure se situant radialement vers l'extérieur au-dessus du point intermédiaire radialement au-dessus du point intermédiaire d'une valeur « H2 » avec H2=HB/2+C, où C, est compris entre 90% du pas et 250% du pas, le pas P étant compris entre 0,8*D et 2,5*D et H=H1+H2.

L'invention s'applique en particulier à des pneumatiques de type « poids lourds », en plus particulièrement à ceux montés sur des jantes en une seule pièce de type « drop center » ; l'homme du métier sait que le siège de bourrelet sur de telles jantes est incliné par rapport à l'axe de rotation du pneumatique d'un angle de 15°.

A la surface du bourrelet du pneumatique, considérons le point auquel se termine le contact du bourrelet de pneumatique sur le rebord de la jante sur laquelle il est monté. On sait que, lors du roulage du pneumatique, à chaque passage dans l'aire de contact, ce point se déplace vers l'extrémité du rebord de jante, sous l'effet de l'écrasement dû à la charge que porte le pneumatique. On appelle « point de contact long » le point le plus proche du bout du rebord de jante auquel se termine le contact, ce qui survient lors du passage du bourrelet dans l'aire de contact. On appelle « point de contact court » le point de contact en dehors de toute déformation due à l'écrasement du pneumatique sous l'effet de la charge, c'est-à-dire le point le plus éloigné du bout du rebord de jante auquel se termine le contact. A toutes fins utiles, rappelons que le diamètre nominal de la jante est donné dans les normes bien connues de l'homme du métier (ETRTO par exemple)

Ainsi, l'invention consiste à aménager de petites entailles, de type lamelle, débouchant à la surface de portage, pénétrant dans le protecteur, lesdites entailles étant de préférence orientées sensiblement dans la direction radiale ; cette orientation dans la direction radiale facilite le démoulage, mais les entailles pourraient aussi être inclinées par rapport à la direction radiale, par exemple d'un angle de l'ordre de 15° à 20°. Lesdites entailles sont aménagées dans la zone du flanc du pneumatique entrant et sortant du contact jante lors du roulage, et débordent de cette zone. On a constaté une très forte réduction de l'usure au portage. L'effet de l'invention est tel que cela peut aboutir à une simplification du pneumatique par suppression du raidisseur.

Dans une mise en oeuvre avantageuse de l'invention, le pneumatique comporte un sillon circonférentiel continu disposé en haut radialement des entailles, ce qui leur confère plus de souplesse encore. Il est préférable de garder un taux d'entaillement volumique le plus faible possible, afin de résister aux fortes pressions mises en jeu (-30bar).

Dans le présent mémoire, on entend par « renforcement » un élément comme un câble, par exemple métallique ou textile, ou un renfort monofilamentaire, par exemple un composite comportant des fibres de verre noyés dans une matrice en résine.

Dans une mise en oeuvre avantageuse de l'invention, chaque entaille a une taille circonférentielle « T » comprise entre 0,5 mm et 1 mm.

Sous un autre aspect, il est avantageux que chaque entaille ait une profondeur « D » inférieure à 10 mm, et de préférence inférieure à 7,5 mm.

Quant au pas P, il peut tout simplement être constant. Des observations ont montré qu'il est de préférence compris entre D et 1,7*D. Comme règles de bonne pratique, indiquons que le pas P entre entailles dans la direction circonférentielle est compris entre 2,4 mm et 12 mm, que la profondeur D vaut au moins 3 mm. Observons que, vu les dimensions en cause (La longueur curviligne H d'une entaille est typiquement comprise entre 20 mm et 30 mm), il est de très bonne approximation de caractériser le pas en millimètre et non pas en valeur d'angle car la variation de distance entre entailles est négligeable lorsqu'on se déplace radialement le long d'une entaille. Un pas P trop petit par rapport à la longueur curviligne H autorise le bloc de caoutchouc entre deux entailles à fléchir beaucoup trop sous l'effort circonférentiel créé pendant le roulage du pneumatique, ce qui induit une usure irrégulière, voire un arrachement de caoutchouc. Un pas P trop grand fait que le bloc de caoutchouc entre deux entailles reste trop rigide et on ne combat pas suffisamment le phénomène d'usure au portage.

Le rapport entre la profondeur « D » de chaque entaille et leur taille circonférentielle T peut aussi faire l'objet d'une optimisation. Il s'avère favorable que le rapport D/T soit plus grand ou égal à 4,5, et de préférence encore soit plus grand ou égal à 6.

Les bons résultats en usure au portage obtenus par l'invention sont d'autant plus surprenants que les conceptions plus usuelles de ce type de pneumatiques comportent une zone du bourrelet relativement épaisse notamment pour contenir des éléments complémentaires tels que des raidisseurs et permettre de supporter les appuis sur les crochets de jante lors des roulages.

Les inventeurs ont ainsi su mettre en évidence que les pneumatiques réalisés conformément à l'invention et qui présentent une zone du bourrelet relativement peu épaisse associée notamment à l'absence de couches d'éléments de renforcement complémentaires (c'est-à-dire autre que la nappe de carcasse), telles que des raidisseurs, permettent d'alléger le pneumatique et contre toute attente de conserver des propriétés en termes d'endurance satisfaisantes, voire de les améliorer.

Ajoutons encore que l'on a constaté que l'invention permet même de ne pas incorporer de raidisseur dans le bourrelet, d'où le choix d'une expression de l'invention permettant de lire les caractéristiques aussi bien si le renforcement axialement le plus à l'extérieur est un retournement de carcasse que s'il s'agit d'un raidisseur. Dans le cas où il n'y a pas de raidisseur, l'aptitude à limiter l'usure au portage est moindre mais on retrouve sensiblement le même niveau de performance sur ce critère que pour un pneumatique n'utilisant pas l'enseignement de la présente invention et comportant un raidisseur. L'invention est alors applique à un pneumatique pour véhicule de type poids lourd, destiné à être monté sur une jante creuse (15° drop center), à armature de carcasse radiale, constituée d'une unique couche d'armature de carcasse formée d'éléments de renforcement insérés entre deux couches de calandrage de mélange polymérique, la couche d'éléments de renforcement de l'armature de carcasse étant ancrée dans chacun des bourrelets par retournement autour d'une tringle pour former une partie principale de la couche d'armature de carcasse s'étendant d'une tringle à l'autre et un retournement de la couche d'armature de carcasse dans chacun des bourrelets, le retournement de la couche d'armature de carcasse et la partie principale de la couche d'armature de carcasse sont les seules couches d'éléments de renforcement dont l'allongement à rupture est inférieur à 6 % présentes dans une zone du flanc constituant au moins 90% de la surface du flanc comprise radialement entre l'extrémité du retournement de la couche d'armature de carcasse et le point radialement le plus à l'extérieur de la tringle.

### Brève description des figures

D'autres détails et caractéristiques avantageux de l'invention ressortiront ci-après de la description des exemples de réalisation de l'invention notamment en référence aux figures 1 à 5 qui représentent :
- la figure 1, une vue méridienne partielle d'un pneumatique selon l'invention, monté sur une jante, gonflé et non chargé ;
- la figure 2, un agrandissement du bourrelet du pneumatique de la figure 1 ;
- la figure 3, une vue de côté montrant le flanc, le bourrelet d'un pneumatique selon l'invention, monté sur une jante dont on voit le rebord, gonflé et chargé ;
- les figures 4a et 4b, une coupe méridienne partielle, respectivement selon la zone de coupe correspondant à l'azimut A1 sur la figure 3 et selon la zone de coupe correspondant à l'azimut A2 sur la figure 3 ;
- la figure 5, une vue en perspective, partielle, d'un bourrelet du pneumatique de la figure 1.

### Description détaillée de l'invention

Les figures ne sont pas représentées à l'échelle pour en simplifier la compréhension. L'invention est illustrée par une application à un pneumatique conçu pour être monté sur une jante à base creuse (15° drop center) ou jante dite à siège coincé (plus communément désigné par « seat coincé »), telle que définie dans l'ETRTO (European Tyre and Rim Organisation, voir Manuel Standards 2014), dont les sièges destinés à recevoir les bourrelets du pneumatique présentent une forme tronconique, l'angle formé avec la direction axiale étant sensiblement équivalant à 15°. Ces sièges sont par ailleurs prolongés par des crochets de jante de grandeur réduite par rapport à des crochets de jantes à bases plates. Cependant, cette application n'est en aucune façon limitative, l'invention pouvant s'appliquer à tout type de bourrelet de pneumatique, et notamment pour des pneumatiques à monter sur des jantes à base plate (plus communément désigné par « seat plat ») dont les sièges de jante présentent des formes sensiblement cylindriques et dont les crochets débutent par une partie sensiblement comprise dans un plan perpendiculaire à l'axe de rotation.

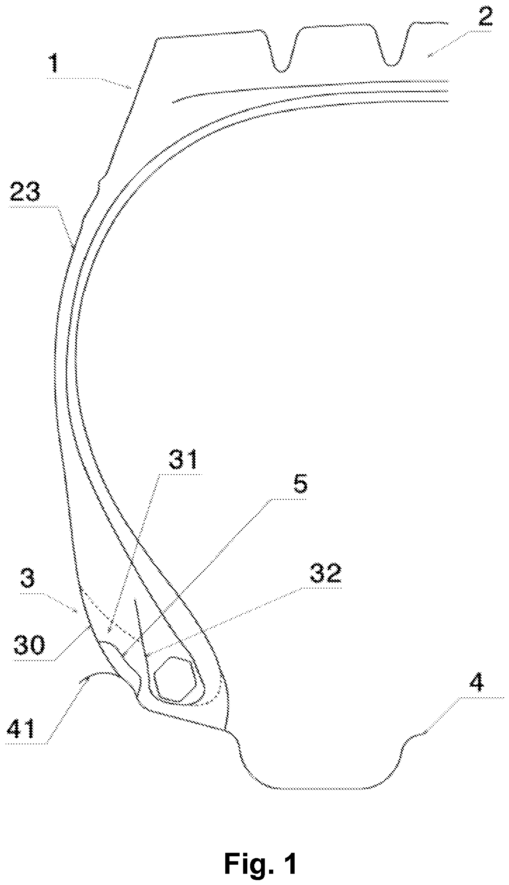

A la figure 1, le pneumatique 1 est de dimension 12 R 22,5. Ledit pneumatique 1 comprend un sommet comportant une bande de roulement 2, deux flancs 23 chacun terminés radialement vers l'intérieur par un bourrelet 3. On voit aussi la jante 4, de largeur 9 pouces, sur laquelle est monté ce pneumatique, ainsi que le rebord 41 de jante. Le bourrelet comporte un renforcement 31 appelé protecteur, qui s'étend sensiblement en regard de toute la surface destinée à être en contact avec la jante 4, et qui apparait sur la coupe méridienne entre la surface extérieure 30 du bourrelet 3 et la carcasse 32. Pour rappel, le protecteur est un élément réalisé dans un matériau de grande dureté, isotrope (c'est-à-dire non renforcé par des fils ou câbles).

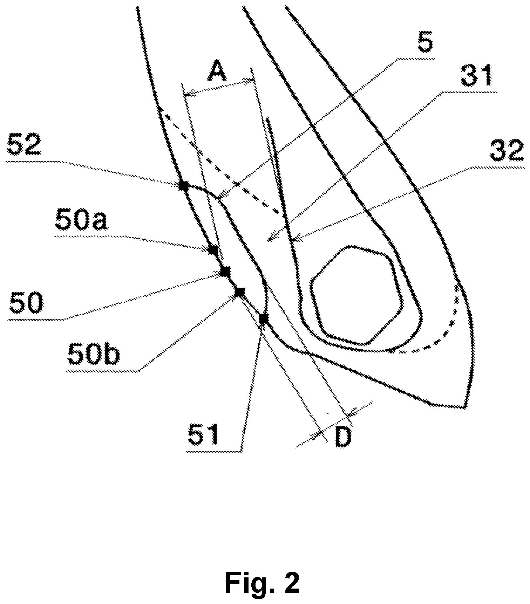

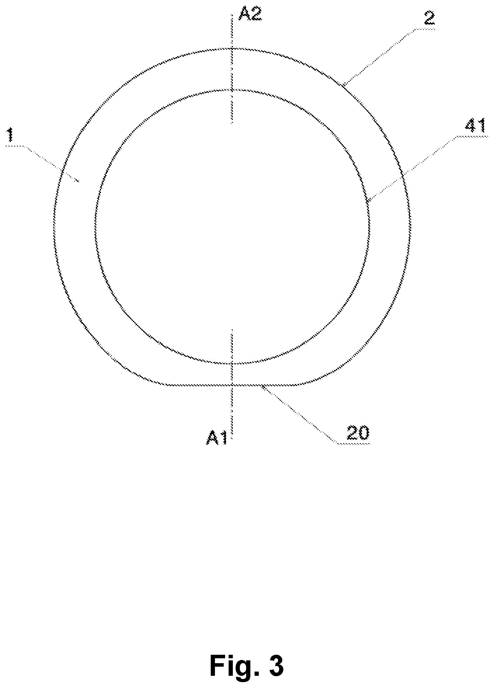

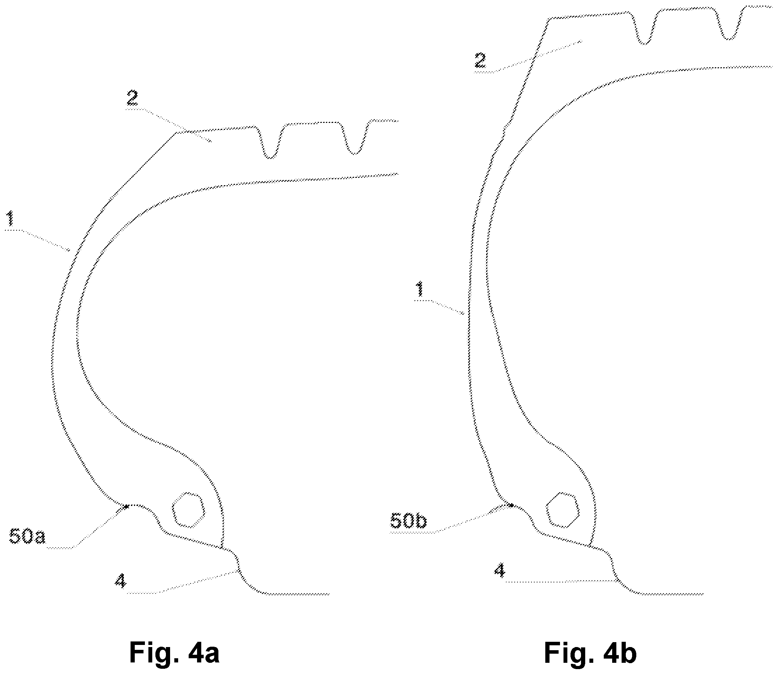

Aux figures 1 et 2, on voit des entailles 5 orientées radialement. La taille circonférentielle T de ces entailles vaut 0,8 mm (c'est-à-dire leur dimension dans le sens circonférentiel). A la figure 1, on voit que ces entailles sont en regard du rebord 41 de jante ; lesdites entailles s'étendent radialement (voir figure 2) depuis une limite radialement intérieure 51 qui se situe jusqu'à une limite radialement extérieure 52 située radialement au-dessus de la zone de contact avec la jante. Pour déterminer ces limites radialement intérieure 51 et radialement extérieure 52, on procède aux repérages suivants sur le pneumatique monté sur sa jante préconisée par l'ETRTO, gonflé à 8,5 bars, chargé à 7100 kg, soit deux fois son indice de charge. On repère le point de contact long 50a avec la jante à un premier azimut A1 (voir figure 3) correspondant au centre de l'aire de contact 20 du pneumatique 1 sur le sol (voir aussi figure 4a). On repère le point de contact court 50b avec la jante à un second azimut A2 (voir figure 3) situé à 180° du premier azimut A1. On mesure la longueur curviligne HB entre le point de contact long 50a et le point de contact court 50b : HB = 6,3 mm (voir aussi figure 4b). Cela permet de repérer le point intermédiaire 50 (voir figure 2).

Ensuite, à partir du point intermédiaire 50, on reporte la limite radialement intérieure 51 en se déplaçant radialement vers l'intérieur d'une distance curviligne H1=HB/2+B, où B est égal à 160% du pas. Puis reporte la limite radialement extérieure 52 en se déplaçant radialement vers l'extérieur d'une distance curviligne H2=HB/2+B, C étant choisi égal à B dans cet exemple de mise en oeuvre (dessins non à l'échelle). On obtient la longueur curviligne H=H1+H2 de l'entaille 50.

Au global, la longueur curviligne H de chaque lamelle doit être suffisante pour limiter significativement l'usure au portage, ce qui au besoin peut s'ajuster aisément par quelques expérimentations ; par convention, les entailles pouvant être radiales ou être inclinées par rapport à la direction radiale, dans le cas d'entailles inclinées radialement, on considère la longueur curviligne sur la projection radiale de l'entaille ; dans l'exemple illustrant l'invention, ladite longueur curviligne H vaut 26 mm. Chaque entaille 5 présente une profondeur D valant 5 mm. Le pas P est égal à 6 mm.

Comme on le voit aux figures 1 et 2, aux limites radialement intérieure 51 et radialement extérieure 52 des entailles 5, les bords 53 d'entaille 5 sont arrondis. Cela est simplement une disposition de bonne pratique ; plusieurs descripteurs sont possibles : par exemple, on adopte un congé de raccordement 6 mm ; le congé de raccordement pour passer de la profondeur D de 0 mm à Dmax (valeur maximale de la profondeur) adopte un de rayon compris entre 1,1 et 1,25 fois Dmax ; l'angle de la tangente au bord d'entaille avec la normale à la surface extérieure est supérieur à 20° et inférieur à 45°. L'entaille est, en dehors de ses bords, sensiblement à distance constante de la surface axialement extérieure du bourrelet.

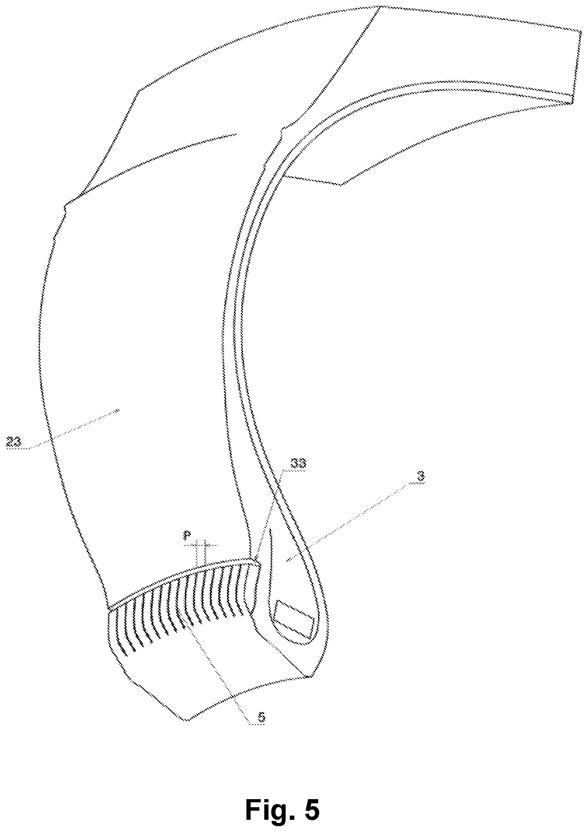

La figure 5 montre en perspective l'allure du bourrelet dans lequel on voit les entailles 5, séparées d'un pas P de valeur constante, et on voit aussi un sillon circonférentiel continu 33 disposé en haut radialement des entailles.

On a effectué un roulage avec un pneumatique de référence R dépourvu d'entailles et pourvu d'un raidisseur formé par des câbles métalliques 9.35 au pas de 2.5 mm, incliné à 22° par rapport à la direction circonférentielle, avec :
- un pneumatique T1 pourvu d'entailles conformes à la description ci-dessus, donc sans raidisseur (pour rappel, les caractéristiques des entailles 5 et leur arrangement sont : taille circonférentielle T = 0,8 mm, longueur curviligne H = 26 mm, profondeur D = 5 mm, pas P = 6 mm) et par ailleurs en tous points identique au pneumatique R,
- un pneumatique T2 pourvu d'entailles conformes à la description ci-dessus, sauf la taille circonférentielle T portée à 4 mm et le pas P porté à 15 mm, et par ailleurs en tous points identique au pneumatique T1,
- un pneumatique T3 dépourvu de raidisseur et par ailleurs en tous points identique au pneumatique R.

La machine d'essai est de type « pneu sur pneu ». Tous les pneumatiques sont montés sur une jante avec les crochets artificiellement agressifs et nettoyé par sablage. La pression est celle donnée par l'ETRTO diminuée de 36% ; la charge appliquée vaut 1,5 fois la charge nominale et la vitesse est de 50 km/h. Les pneus sont amenés à 3 mm de profondeur de sculpture restante. L'usure est mesurée par profilométrie laser, après 20000 km de roulage, sur trois zones uniformément réparties suivant la direction circonférentielles. On effectue des rélevés de 0 à 15°, de 120 à 135° et de 240 à 255° : on relève le profil avec un profilomètre laser qui enregistre les points sur un quadrillage régulier de côté 0,3 mm. On construit alors une surface par tous ces points avec un outil de CAO, par exemple « Quick surface reconstruction » de Catia^{™} V5. On évalue le volume entre cette surface et le profil initial et on en déduit la perte d'épaisseur. On prend ensuite la moyenne des trois zones.

| | R | T₁ | T₂ | T₃ |
|---|---|---|---|---|
| épaisseur moyenne perdue (mm) | 0,23 | 0,30 | 0,8 | 0.95 |
| Indice | 100 | 77 (=0,23/0,30) | 29 | 24 |

Comme on peut le voir à la lecture de ce tableau, le pneumatique T1 conforme à la description de la mise en oeuvre de l'invention objet du présent mémoire montre une usure au portage à peine supérieure à ce que montre le pneumatique de référence, ce qui est une performance remarquable car le pneumatique T1 n'a pas de raidisseur. Le pneumatique T2 montre qu'un mauvais choix de valeurs conduit à une dégradation de la performance d'usure au portage pour l'amener à un niveau proche du pneumatique sans raidisseur (pneumatique T3). Cela illustre tout l'intérêt de l'optimisation de la zone du bourrelet apportée par l'invention (pneumatique T1) dans le but, par exemple, d'une amélioration du compromis usure au portage - coût de revient industriel, ce dernier étant réduit par la simplification de zone basse du pneumatique.

## Revendications

1. Pneumatique (1) comprenant une bande de roulement (2), ladite bande de roulement étant réunie à deux bourrelets (3) par deux flancs (23), chaque bourrelet (3) ayant une surface de contact (30) destinée à être en contact avec un rebord de jante, ledit bourrelet comportant au moins un renforcement (31) axialement le plus à l'extérieur présentant une interface radialement extérieure, le bourrelet (3) comportant des entailles (5) d'épaisseur « T » comprise entre 0,1 mm et 1,5 mm, le pneumatique présentant un pas circonférentiel « P » entre deux entailles (5) consécutives, lesdites entailles (5) s'étendant sensiblement perpendiculairement à la surface de contact (30), sur une profondeur « D » inférieure à l'épaisseur axiale « A » de matériau non pourvu de renforcement compris entre ladite surface de contact (30) et la carcasse (32), et supérieure à la plus petite des valeurs de 50% de A et 3 mm, **caractérisé en ce que** , lesdites entailles s'étendant radialement depuis une limite radialement intérieure (51) et une limite radialement extérieure (52), la longueur curviligne entre la limite radialement intérieure (51) et la limite radialement extérieure (52) valant « H », un point intermédiaire (50) étant, sur une coupe méridienne du pneumatique monté sur jante, gonflé à pression nominale et chargé à deux fois sa capacité de charge nominale, situé à mi-distance curviligne entre le point de contact long (50a) avec la jante à un premier azimut (A1 ) correspondant au centre de l'aire de contact (20) du pneumatique (1 ) sur le sol et le point de contact court (50b) avec la jante à un second azimut (A2) situé à 180° du premier azimut (A1 ), le point de contact long (50a) étant le point le plus proche du bout du rebord de jante auquel se termine le contact, ce qui survient lors du passage du bourrelet dans l'aire de contact, le point de contact court (50b) étant le point de contact en dehors de toute déformation due à l'écrasement du pneumatique (1) sous l'effet de la charge, c'est-à-dire le point le plus éloigné du bout du rebord de jante auquel se termine le contact, la longueur curviligne entre le point de contact long (50a) et le point de contact court (50b) valant « HB », ladite limite radialement intérieure (51) se situant radialement vers l'intérieur par rapport audit point intermédiaire (50) d'une valeur « H1 » avec H1=HB/2+B, où B est compris entre 90% du pas P et le minimum entre 250% du pas P et la distance radiale entre le point intermédiaire (50) et la moitié du diamètre nominal de la jante, ladite limite radialement extérieure (52) se situant radialement vers l'extérieur au-dessus du point intermédiaire (50) d'une valeur « H2 » avec H2=HB/2+C, où C est compris entre 90% du pas et 250% du pas, le pas P étant compris entre 0,8*D et 2,5*D et H=H1+H2.

2. Pneumatique selon la revendication 1, **caractérisé en ce que** C est égal à B.

3. Pneumatique selon la revendication 1 ou 2, caractérisé en ce oue chague entaille a une taille circonférentielle « T » comprise entre 0,5 mm et 1 mm.

4. Pneumatique selon l'une des revendications 1 à 3, **caractérisé en ce que** chaque entaille a une profondeur « D » inférieur à 10 mm.

5. Pneumatique selon l'une des revendications 1 à 3, **caractérisé en ce que** chaque entaille a une profondeur « D » inférieur à 7,5 mm.

6. Pneumatique selon l'une des revendications 1 à 5, **caractérisé en ce que** pas P est compris entre D et 1,7*D.

7. Pneumatique selon l'une des revendications 1 à 6, **caractérisé en ce que** D/T est plus grand ou égal à 4,5.

8. Pneumatique selon l'une des revendications 1 à 6, **caractérisé en ce que** D/T est plus grand ou égal à 6.

9. Pneumatique selon l'une des revendications 1 à 8, **caractérisé en ce que** chaque entaille est orientée sensiblement radialement.

10. Pneumatique selon l'une des revendications 1 à 9, **caractérisé en ce que** le pas « P » entre entailles dans la direction circonférentielle est compris entre 2,4 mm et 12 mm.

11. Pneumatique selon l'une des revendications 1 à 10, **caractérisé en ce que** la longueur curviligne H est comprise entre 20 mm et 30 mm.

## Patentansprüche

1. Reifen (1) mit einem Laufstreifen (2), wobei der Laufstreifen durch zwei Flanken (23) mit zwei Wülsten (3) verbunden ist, wobei jede Wulst (3) eine Kontaktfläche (30) aufweist, die dazu bestimmt ist, mit einem Felgenhorn in Kontakt zu stehen, wobei die Wulst mindestens eine axial äußerste Verstärkung (31) mit einer radial äußeren Schnittstelle aufweist, wobei die Wulst (3) Einschnitte (5) mit einer Dicke "T" zwischen 0,1 mm und 1,5 mm aufweist, wobei der Reifen zwischen zwei aufeinanderfolgenden Einschnitten (5) eine Umfangsteilung "P" aufweist, wobei sich die Einschnitte (5) im Wesentlichen senkrecht zur Kontaktfläche (30) über eine Tiefe "D" erstrecken, die kleiner ist als die axiale Dicke "A" des nicht mit einer Verstärkung versehenen Materials, das zwischen der Kontaktfläche (30) und der Karkasse (32) enthalten ist, und größer ist als der kleinere der Werte von 50 % von A und 3 mm,
**dadurch gekennzeichnet, dass** sich die Einschnitte radial von einer radial inneren Grenze (51) und einer radial äußeren Grenze (52) erstrecken, die krummlinige Länge zwischen der radial inneren Grenze (51) und der radial äußeren Grenze (52) den Wert "H" hat, wobei ein Zwischenpunkt (50) in einem Meridianschnitt des auf einer Felge montierten, auf Nenndruck aufgepumpten und mit der doppelten Nenntragfähigkeit beladenen Reifens, auf halbem krummlinigen Weg zwischen dem langen Kontaktpunkt (50a) mit der Felge bei einem ersten Azimut (A1), der der Mitte der Kontaktfläche (20) des Reifens (1) auf dem Boden entspricht, und dem kurzen Kontaktpunkt (50b) mit der Felge bei einem zweiten Azimut (A2), der sich 180° vom ersten Azimut (A1) befindet, liegt, wobei der lange Kontaktpunkt (50a) der Punkt ist, der dem Ende des Felgenhorns, an dem der Kontakt endet, am nächsten liegt, was beim Eintritt der Wulst in die Kontaktfläche auftritt, wobei der kurze Kontaktpunkt (50b) der Kontaktpunkt außerhalb jeder Verformung aufgrund des Zusammendrückens des Reifens (1) unter dem Einfluss der Last ist, d. h. der vom Ende des Felgenhorns am weitesten entfernte Punkt, an dem der Kontakt endet, wobei die krummlinige Länge zwischen dem langen Kontaktpunkt (50a) und dem kurzen Kontaktpunkt (50b) den Wert "HB" hat, wobei die radial innere Grenze (51) in Bezug auf den Zwischenpunkt (50) um einen Wert "H1" radial nach innen liegt, wobei H1 = HB / 2 + B, wobei B zwischen 90 % der Teilung P und dem Minimum zwischen 250 % der Teilung P und dem radialen Abstand zwischen dem Zwischenpunkt (50) und der Hälfte des Nenndurchmessers der Felge liegt, wobei die radial äußere Grenze (52) über dem Zwischenpunkt (50) um einen Wert "H2" radial nach außen liegt, wobei H2 = HB / 2 + C, wobei C zwischen 90 % der Teilung und 250 % der Teilung liegt, wobei die Teilung P zwischen 0,8 * D und 2,5 * D liegt und H = H1 + H2.

2. Reifen nach Anspruch 1, **dadurch gekennzeichnet, dass** C gleich B ist.

3. Reifen nach Anspruch 1 oder 2, **dadurch gekennzeichnet, dass** jeder Einschnitt eine Umfangsgröße "T" zwischen 0,5 mm und 1 mm aufweist.

4. Reifen nach einem der Ansprüche 1 bis 3, **dadurch gekennzeichnet, dass** jeder Einschnitt eine Tiefe "D" von weniger als 10 mm aufweist.

5. Reifen nach einem der Ansprüche 1 bis 3, **dadurch gekennzeichnet, dass** jeder Einschnitt eine Tiefe "D" von weniger als 7,5 mm aufweist.

6. Reifen nach einem der Ansprüche 1 bis 5, **dadurch gekennzeichnet, dass** die Teilung P zwischen D und 1,7 * D beträgt.

7. Reifen nach einem der Ansprüche 1 bis 6, **dadurch gekennzeichnet, dass** D / T größer als oder gleich 4,5 ist.

8. Reifen nach einem der Ansprüche 1 bis 6, **dadurch gekennzeichnet, dass** D / T größer als oder gleich 6 ist.

9. Reifen nach einem der Ansprüche 1 bis 8, **dadurch gekennzeichnet, dass** jeder Einschnitt im Wesentlichen radial ausgerichtet ist.

10. Reifen nach einem der Ansprüche 1 bis 9, **dadurch gekennzeichnet, dass** die Teilung "P" zwischen Einschnitten in der Umfangsrichtung zwischen 2,4 mm und 12 mm beträgt.

11. Reifen nach einem der Ansprüche 1 bis 10, **dadurch gekennzeichnet, dass** die krummlinige Länge H zwischen 20 mm und 30 mm beträgt.

## Claims

1. Tyre (1) comprising a tread (2), said tread being joined to two beads (3) by two sidewalls (23), each bead (3) having a contact surface (30) intended to be in contact with a rim bead seat, said bead having at least one axially outermost reinforcer (31) having a radially outer interface (310), the bead (3) has notches (5) with a thickness "T" of between 0.1 mm and 1.5 mm, the tyre having a circumferential pitch "P" between two consecutive notches (5), said notches (5) extending substantially perpendicular to the contact surface (30), to a depth "D" less than the axial thickness "A" of material not provided with reinforcer between said contact surface (30) and said interface (310), and greater than the smallest of the values of 50% of A and 3 mm, **characterized in that** said notches extending radially from a radially inner limit (51) and a radially outer limit (52), the curvilinear length between the radially inner limit (51) and the radially outer limit (52) being equal to "H", an intermediate point (50) being, in a meridian cross section of the rim-mounted tyre, inflated to nominal pressure and loaded to twice its nominal load-bearing capacity, situated halfway along the curvilinear distance between the point of long contact (50a) with the rim, closest point to the end of the rim flange at which contact ends, which occurs when the bead passes through the contact patch, at a first azimuth (A1) corresponding to the centre of the contact patch (20) in which the tyre (1) is in contact with the ground and the point of short contact (50b) with the rim, point of contact apart from any deformation due to the crushing of the tire under the effect of the load, i.e. the point farthest from the end of the rim flange at which the contact ends, at a second azimuth (A2) situated 180° from the first azimuth (A1), the curvilinear length between the point of long contact (50a) and the point of short contact (50b) being equal to "HB", said radially inner limit (51) being situated radially on the inside relative to said intermediate point (50) by a value "H1" with H1=HB/2+B, where B is between 90% of the pitch P and the minimum of 250% of the pitch P and the radial distance between the intermediate point and half the nominal diameter of the rim, as far as a radially outer limit (52) situated radially above the intermediate point (50) by a value "H2" with H2=HB/2+C, where C is between 90% of the pitch and 250% of the pitch, the pitch P being between 0.8*D and 2.5*D and H=H1+H2.

2. Tyre according to Claim 1, **characterized in that** C is equal to B.

3. Tyre according to Claim 1 or 2, **characterized in that** each notch has a thickness "T" of between 0.5 mm and 1 mm.

4. Tyre according to one of Claims 1 to 3, **characterized in that** each notch has a depth "D" of less than 10 mm.

5. Tyre according to one of Claims 1 to 3, **characterized in that** each notch has a depth "D" of less than 7.5 mm.

6. Tyre according to one of Claims 1 to 5, **characterized in that** pitch P is between D and 1.7*D.

7. Tyre according to one of Claims 1 to 6, **characterized in that** D/T is greater than or equal to 4.5.

8. Tyre according to one of Claims 1 to 6, **characterized in that** D/T is greater than or equal to 6.

9. Tyre according to one of Claims 1 to 8, **characterized in that** each notch is oriented substantially radially.

10. Tyre according to one of Claims 1 to 9, **characterized in that** the pitch "P" between notches in the circumferential direction is between 2.4 mm and 12 mm.

11. Tyre according to one of Claims 1 to 10, **characterized in that** the curvilinear length H is between 20 mm and 30 mm.
